# EUROPEAN PATENT APPLICATION

(11) **EP 2 199 819 A1**
(43) Date of publication of application: **23.06.2010**
(21) Application number: 08022077.5
(22) Date of filing: 19.12.2008
(51) Int. Cl.: G01S 5/02, H04W 64/00

(54) **Method of determining a location of a mobile device and method of managing a list for use in such a method**

(71) Applicant: Koninklijke KPN N.V., 2516 CK The Hague (NL); Nederlandse Organisatie voor toegepast -natuurwetenschappelijk onderzoek TNO, 2628 VK Delft (NL)
(72) Inventor: Selgert, Franklin, 2651 BL Berkel en Rodenrys (NL); Norp, Antonius Hendrikus Johannes, 2584 EN The Hague (NL)
(74) Representative: Wuyts, Koenraad Maria

(57) **Abstract**

The invention relates to a method of determining a location of a mobile device for use in a first communication network and a second communication network. The mobile device is camped on a cellular base station in the second communication network. According to the method, a list of records of communication units within the first and/or second communication network that are located within a predetermined geographical area is obtained. A communication unit record contains information representative of the identity of the respective communication unit and information representative of the position of the respective communication unit. Additionally, with the mobile device, communication units within the first and second communication network are detected. Finally, the location of the mobile device is determined based on the information representative of the position of the detected communication units.

## Description

### FIELD OF THE INVENTION

The invention relates to a method of determining a location of a mobile device. Additionally, the invention relates to a mobile device using such a method. Furthermore, the invention relates to a method of managing a list of records of communication units located within a coverage area of a cellular base station, and a cellular base station using such a method. Finally, the invention relates to an access point for use in such a method.

### BACKGROUND OF THE INVENTION

Nowadays, the use of mobile devices, e.g. personal digital assistants, portable computers and mobile phones, for wireless communication purposes is widespread. Furthermore, new applications for these devices emerge rapidly. In many of these new applications, services are provided which relate to functionality to the end user of the mobile device based on its location, so called Location Based Services (LBS). Services include for example providing navigational support, providing a local weather forecast or searching for a nearby restaurant.

Depending on the type of service to be provided, different methods of determining the location of the mobile device can be applied. Some services require very accurate locations, while others only need to know the location in a more general fashion.

Well-known methods of determining the location of a mobile device are based on the location of a base station of the radio cell the mobile device is camped on. In these methods, localization may for example be based on cellular base station identifiers sent by cellular base stations in the network. If the mobile device knows the geographic location of the base stations corresponding to the base station identifiers, it can determine its position. The determination may be done by assuming that the position of the mobile device coincides with the closest base station, by calculating the position using a triangulation technique based on positions of surrounding base stations, or by using other techniques known to a person skilled in the art.

Because the coverage area of a cellular base station is relatively large, the accuracy of the localization will be relatively low. This may become an issue for future mobile device applications, in particular if these applications involve LBS that need a very accurate location determination. Especially in buildings, the location determination can be improved, e.g. to determine on which floor the mobile device is located.

One way to improve the accuracy of the determined position, is to base the location determination on wireless access points, e.g. access points used in a wireless local area network (WLAN). Wireless access points generally have a smaller coverage area than cellular base stations. Furthermore, wireless access points are often located in buildings. By using access point identifiers of wireless access points, Service Set Identifier (SSID) in WLAN, a more precise location determination is possible. A method of determining a location of a mobile device based on wireless access points is described in US-patent 6,968,194. A wireless access point that is equipped to be used in such a method has for example been described in European patent application 1802154.

Generally, the coverage of wireless access points is not continuous, but concentrated in so called hotspots. As a result, in some geographical areas, the density of wireless access points is relatively low. Consequently, in these areas, a localization of a mobile device based on a method as described in US-patent 6,968,194 may be less accurate than desired. Thus, a more widely applicable improvement of localization accuracy is desirable.

### SUMMARY OF THE INVENTION

As mentioned above, a further improvement of the reliability of an accurate localization of a mobile device is desired. For this purpose, embodiments of the invention relate to a method A method of determining a location of a mobile device for use in a first communication network and a second communication network, and in communication with a cellular base station in the second communication network, the method comprising:
- obtaining, a list of records of communication units within the first and/or second communication network that are located within a predetermined geographical area, the communication unit records comprising information representative of the identity of the respective communication units and information representative of the position of the respective communication units;
- detecting communication units within the first and second communication network with the mobile device; and
- determining the location of the mobile device based on the information representative of the position of the detected communication units.

In embodiments of the invention, the communication unit record further comprises information representative of one or more types of radio technology supported by the respective communication unit. If a mobile device has a general idea with respect to its position, the mobile device may use this information to limit its detection to one or more types of radio technology used by communication units that are expected to be detectable.

The nominal coverage area of a communication unit within the second communication network may be larger than a nominal coverage area of a communication unit within the first communication network. A large coverage area of a communication unit within the second network enables uncomplicated location determination over a large geographical area. A small coverage area of a communication unit within the first network facilitates location determination with high accuracy.

The list may be obtained by receiving the list in response to sending a request for reception of the list to the cellular base station. In this arrangement, the capacity of a broadcast channel of the base station is not burdened unnecessarily. Alternatively, the list may be obtained by reception via a broadcast channel. This arrangement saves time, as the mobile device can obtain the list without a need to send a request and wait for a response.

Embodiments of the invention relate to a mobile device arranged to be part of a first communication network and a second communication network, the mobile device comprising:
- a receiver for receiving data from one or more communication units in the first communication network and/or the second communication network;
- a memory for storing a list of records of communication units located within a predetermined geographical area; and
- a processor for processing data received via the receiver and/or the list stored in the memory;
wherein the mobile device is arranged to perform embodiments of the aforementioned method.

Embodiments of the invention relate to a method of managing a list for use in a cellular base station, the list comprising records of communication units located within a predetermined geographical area, a communication unit record comprising information representative of the identity of the respective communication units and information representative of the position of the respective communication units, the method comprising:
- receiving a message from a communication unit, the message comprising the information representative of the identity of the respective communication unit and information representative of the position of the respective communication unit;
- amending the information representative of the position of the communication unit in the list if the information representative of the identity of the communication unit relates to a communication unit being present in the list and the information representative of the position of that communication unit in the list differs from the information representative of the position received in the message; and
- adding a record of a communication unit to the list, including the information representative of the identity of the communication unit and the information representative of the position of the communication unit, if the information representative of the identity of the communication unit relates to a communication unit not being present in the list.

The method of managing a list enables the cellular base station to provide a list that represents the most recent communication unit distribution within the predetermined geographical area.

In embodiments of the invention, the communication unit record further comprises information representative of one or more types of radio technology supported by the respective communication unit. If a mobile device, which receives the list managed by the base station, has a general idea with respect to its position, it may use this information to limit its detection of communication units to one or more types of radio technology used by communication units that are expected to be detectable.

Embodiments of the invention relate to a cellular base station comprising:
- a receiver for receiving data from one or more communication units in the first communication network and/or the second communication network;
- a transmitter for transmitting data towards one or more communication units in the first communication network and/or the second communication network
- a database for storing data;
- a processor for processing data received via the receiver and/or stored in the memory; wherein the base station is arranged to perform embodiments of aforementioned method of managing a list.

The receiver of the base station may be arranged to receive a request from a mobile device for providing the list to the mobile device. The base station may then be arranged to provide the list via the transmitter in response to such request. In this embodiment, the capacity of a broadcast channel of the base station is not burdened unnecessarily. Alternatively, the transmitter of the base station may be arranged to transmit the list via a broadcast channel. Such an embodiment saves time, as the mobile device can obtain the list without a need to send a request and wait for a response.

Finally, embodiments of the invention relate to an access point comprising:
- an access point memory storing information representative of an identity of the access point, information representative of a position of the access point; and information representative of one or more types of radio technology supported by the access point;
- a receiver for detecting one or more cellular base stations within a second communication network;
- a processor for enabling transmission of the access point identifier, the information representative of the position of the access point and the information representative of the one or more types of radio technology supported by the access point to the one or more cellular base stations upon detection.

In embodiments, the access point comprises a position determination unit, e.g. a global positioning system (GPS) receiver, for determining the position of the access point and storing the position in the access point memory. The use of a position determination unit enables the access point to determine its location in a relatively reliable manner.

Further aspects of the invention and embodiments as defined in the claims will be clarified with reference to the attached drawings and corresponding description. It will be understood that the invention is not in anyway restricted to the embodiments disclosed in these drawings.

### BRIEF DESCRIPTION OF THE DRAWINGS

In the drawings:
FIG. 1A schematically depicts an exemplary network architecture for implementation of embodiments of the invention, in which a mobile device is positioned at a first location;
FIG. 1B schematically depicts the network architecture of FIG. 1A, in which a mobile device is positioned at a second location;
FIG. 1C schematically depicts the network architecture of FIG. 1A, in which a mobile device is positioned at a third location;
FIG. 2 schematically depicts a flow diagram of a method of determining a location of a mobile device according to an embodiment of the invention;
FIG. 3 schematically depicts a flow diagram of a method of managing a list for use in a base station according to an embodiment of the invention;
FIG. 4 schematically depicts a mobile device according to an embodiment of the invention;
FIG. 5 schematically depicts an embodiment of a cellular base station that may be used in embodiments of the invention;
FIG. 6 schematically depicts an embodiment of an access point that may be used in embodiments of the invention.

### DETAILED DESCRIPTION OF THE DRAWINGS

The following is a description of certain embodiments of the invention, given by way of example only.

Throughout the description the term "communication unit" has been used to refer to a unit for communication in a communication network. Communication units include cellular base stations and (wireless) access points.

Additionally, throughout the description, the expression "coverage area" has been used to refer to a geographical area in which signals can be received from a transmitter of a communication unit in a communication network. For clarity reasons, a coverage area of the transmitter has been depicted as a circle. However, it must be understood that the shape of a coverage area as defined above depends on the actual circumstances and may have any other shape. Coverage areas of communication units within a communication network may vary in size, e.g. due to ambient conditions, transmission power settings of the communication unit, etc. For this reason, circles of different radius have been depicted in figures supporting the description.

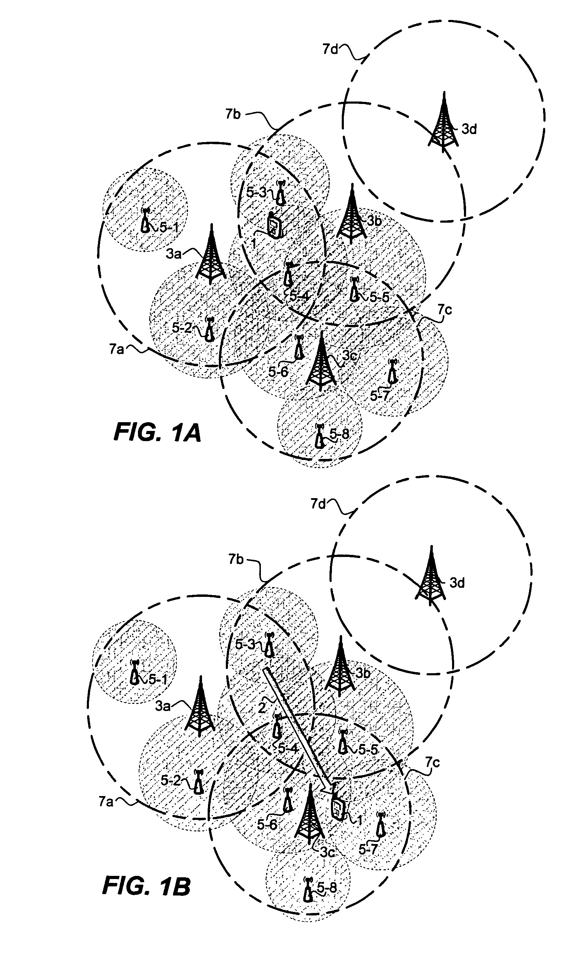

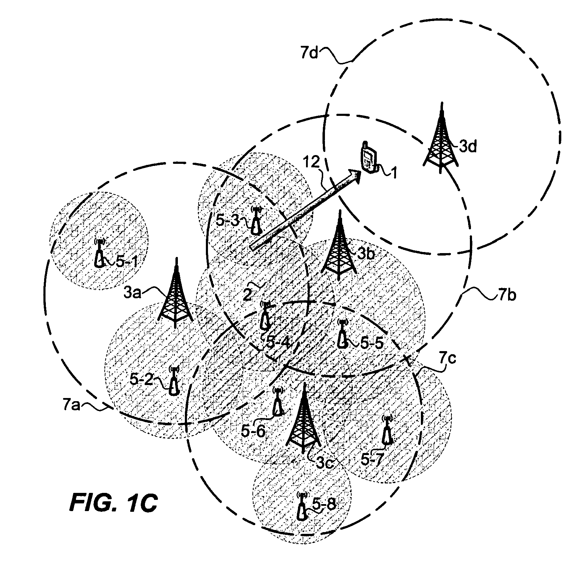

FIGS. 1A and 1B schematically depict an exemplary network architecture for implementation of embodiments of the invention. In FIG. 1A, a mobile device **1** is positioned at a first location. In FIG. 1B, the mobile device **1** is positioned at a second location. The movement of the mobile device **1** from the old location of FIG. 1A to the new location of FIG. 1B is schematically depicted by arrow **2.** In FIG. 1C, the mobile device **1** is positioned at a third location. The movement of the mobile device **1** from the old location of FIG. 1A to the new location of FIG. 1C is schematically depicted by arrow **12.**

The depicted exemplary network architecture further comprises cellular base stations **3a, 3b, 3c, 3d** and a number of access points **5-1** through **5-8,** which may be, for example, wireless access points. The base stations **3a, 3b, 3c, 3d** have a coverage area **7a, 7b, 7c, 7d** respectively. Generally, if the mobile device 1 is positioned within the coverage area of a base station it can communicate with the base station. The access points **5-1** through **5-8** have coverage areas as well, schematically depicted by the dashed circles surrounding each access point. If the mobile device **1** is positioned within the coverage area of an access point, generally it can receive signals from the respective access point.

The access points **5-1** through **5-8** are part of a first communication network. The base stations **3a, 3b, 3c, 3d** are part of a second communication network. The mobile device **1** is arranged to be in communication with both the first communication network and the second communication network. Hereinafter the first communication network will be referred to as the first network, and the second communication network will be referred to as the second network.

The first network may be a wireless communication network, and may be arranged to support a first type of radio technology. The first type of radio technology may typically comprise a shorter-range wireless communication technology such as Bluetooth^{™}, Radio Frequency Identification (RFID), WLAN, Worldwide Interoperability for Microwave Access (WIMAX^{™}), Near Field Communication (NFC), Ultra Wide Band (UWB), Zigbee^{™}, Digital Enhanced Cordless Telecommunications (DECT), Wibree^{™}, and other suitable technologies. In the example shown in FIGS. 1A, 1B, the access points **5-1** to **5-8** and the mobile device **1** are equipped with interfaces for communication using the first type of radio technology.

The second network may be arranged to support a second type of radio technology. The second type of radio technology may typically comprise a standard cellular radio technology used for mobile phones, such as Global System for Mobile telecommunications (GSM), Universal Mobile Telecommunications System (UMTS), Wideband Code Division Multiple Access (WCDMA), Long Term Evolution (LTE), Interim Standard 95 (IS-95), Code Division Multiple Access 2000 (CDMA2000), WIMAX, Digital Video Broadcasting (DVB), technologies related to a private mobile radio standard like Terrestrial Trunked Radio (TETRA), technologies related to a satellite communication standard provided by a standard body like the International Mobile Satellite Organization (InMarSat) or other suitable technologies. In the example shown in FIGS. 1A, 1B, the base stations **3a, 3b, 3c, 3d** and the mobile device **1** are equipped with interfaces for communication using the second type of radio technology.

It is also possible that the second type of radio technology may be selected from the first list provided above, or that the first type of radio technology may be selected from the second list provided above.

Embodiments of the method of determining a location of a mobile device become more efficient if the nominal coverage area of the access point within the first network is smaller than a nominal coverage area of a base station within the second network. A smaller coverage area of the access point in the first network provides an improved accuracy of position determination. The larger coverage area of the base station within the second network improves the availability of the position determination with improved accuracy.

Embodiments of the invention will be explained with reference to the exemplary network architecture of FIGS. 1A, 1B, 1C.

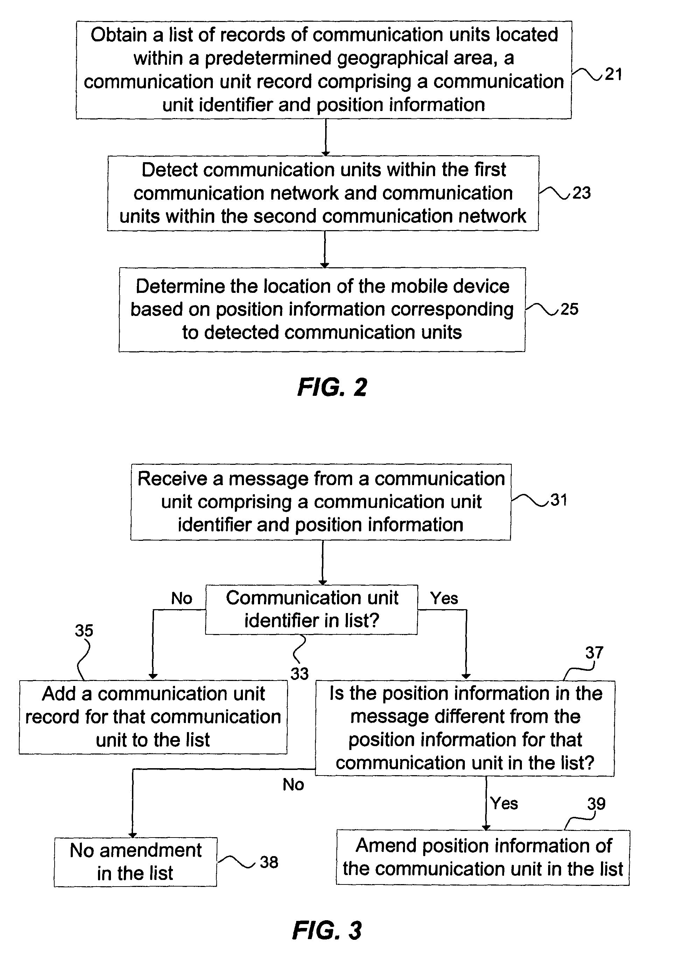

FIG. 2 schematically depicts a flow diagram of an embodiment of a method of determining a location of a mobile device. In action **21,** the mobile device obtains a list of records of communication units located within a predetermined geographical area. The predetermined geographical area can relate to a nationwide, regional or local area.

The predetermined geographical area may also correspond to a coverage area of one or more base stations and/or access points.

A communication unit record comprises information representative of the identity of the respective communication unit, hereinafter referred to as communication unit identifier, and information representative of the position of the respective communication unit, hereinafter referred to as position information. The communication unit record may further comprise information representative of the one or more types of radio technology that are supported by the communication unit, hereinafter referred to as radio technology information.

The communication unit identifier may take the form of a Media Access Control (MAC) address, an SSID, or other suitable code for identifying the communication unit. The list of communication unit records may be stored in the mobile device **1.**

The position information of the communication unit may be in any format known to a person skilled in the art. For example, such position information may take the form of x- and y-coordinates (optionally also a z-coordinate), longitude-latitude coordinates (optionally an altitude coordinate as well) or relate a certain type of coding, e.g. a postal code or a postal address.

The list may be obtained from the base station the mobile device **1** is camped on, i.e. base station **3a** or **3b** in the example of FIG. 1A, base station **3c** in the example of FIG. 1B, and base station **3b** or **3d** in the example of FIG. 1C. The list may be stored in one of these base stations or may be stored in a data storage mode of the network and forwarded to the base stations as needed, e.g. via a fixed network like Internet or a Public Switched Telephone Network (PSTN).

In action **23,** the mobile device **1,** detects communication units within the first and second network, i.e. base stations and access points respectively. The mobile device may detect the communication units by scanning for signals transmitted by the communication units. In an embodiment, the detecting comprises determining an identity of a detected communication unit. The identity may be determined based on information provided by a communication unit via a broadcast channel. Alternatively, such information may be provided by the communication unit via a communication interface in response to a signal sent by the mobile device **1.**

In an embodiment, the detecting comprises determining a position of a detected communication unit. This can be done to verify a position mentioned in the list. The position of the detected communication unit may be based on information provided by the communication unit via a broadcast channel or via a communication interface in response to a signal sent by the mobile device **1.**

If a mobile device **1** has a rough idea with respect to its position, e.g. if it can make an estimate as a result of an earlier determination of its location, and communication records in the list comprise radio technology information, the mobile device **1** may use the list to limit its detection to one or more types of radio technology used by communication units that are expected to be detectable.

Finally, in action **25,** a location of the mobile device **1** is determined based on the position information of the communication units detected in action **23.**

It should be noted that it is not important whether obtaining the list in action **21** takes place prior to the detecting in action **23** or afterwards. Both the obtaining of the list and the detecting of the communication units should be performed before proceeding to the determining of the location of the mobile device in action **25.** For example, the mobile device may be prompted to obtain the list if it detects a base station or access point that is not on the list presently known.

The method of FIG. 2 will now be discussed with reference to the exemplary network architecture depicted in FIGS. 1A, 1B, and 1C. In this example, the predetermined geographical area is taken to correspond to an area covered by at least one of the coverage areas **7a, 7b, 7c, 7d.**

In this situation, the list, which includes communication unit records with respect to communication units being part of at least one of the first and second network, may include base station records for base stations **3a, 3b, 3c, 3d** and access point records for access points **5-1** through **5-8.**

With respect to the first location of the mobile device 1 in FIG. 1A, the mobile device may detect base stations **3a** and **3b,** and access points **5-3** and **5-4.** If the mobile device **1** determines its location solely based on the positions of base stations **3a** and **3b**, the location would not be very accurate due to the base stations large coverage area, as can be readily seen in FIG. 1A. If the mobile device **1** determines its location solely based on the positions of the access points **5-3** and **5-4,** the error margin would be less, but still not optimal. However, if the positions of both the base stations **3a, 3b** and the access points **5-3, 5-4** are used, the accuracy of the determined location is increased still further.

With respect to the second location of the mobile device **1** in FIG. 1B, the mobile device **1** may detect base station **3c** and the access points **5-7, 5-9** and **5-10.** If the mobile device **1** determines its location solely based on the position of the base station **3c,** its determined location would not be accurate. If the mobile device **1** determines its location solely based on the positions of the access points **5-5, 5-6** and **5-7,** its determined location would be more accurate, but may still be improved. However, if the positions of both the base station **3c** and the access points **5-5, 5-6** and **5-7** are used, the accuracy of the determined location is increased still further.

With respect to the third location of the mobile device **1** in FIG. 1C, the mobile device **1** may detect base stations **3b** and **3d.** If the location determination of the mobile device **1** would be solely based on detection of access points, the mobile device **1** would be unable to determine its location. However, a mobile device **1** using a method of determining its location based according to an embodiment of the invention would be able to determine its position based on the position of base stations **3b** and **3d.**

In all situations, the location of the mobile device **1** may be determined in a way known to a person skilled in the art, e.g. a weighed triangulation technique or a technique employing nominal radius of radio technologies supported by the communication units used for the location determination.

As described with respect to FIGS. 1A, 1B, the method of FIG. 2 enables a localization of a mobile device with high accuracy that is widely applicable. The calculation of the location is based on positions of an optimal set or a maximum number of communication units that can be detected by the mobile device.

If more than one base station covers the predetermined geographical area, it is not essential that all base stations manage the list. One base station within the cluster of base stations may be assigned to manage the list such that it remains up to date, and to forward the list to other base stations, preferably via the second network. The other base stations may then store a copy of the list. Alternatively, the list may be stored in a data storage mode of the network, and forwarded as needed. Hereinafter, a base station that manages the list is referred to as a master base station.

Thus, the master base station may be a base station with which the mobile device **1** has established an active communication link, e.g. base station **3c** in FIG. 1B. In this case, a direct communication link is established between the master base station and the mobile device.

Alternatively, a base station without a direct communication link with the mobile device 1 may serve as master base station. In that case, the mobile device **1** may receive a copy of the list from the base station on which it is camped.

The obtaining in action **21** may comprise a sending to a base station of a request for reception of the list. In response to this request, the list is received by the mobile device **1** from the base station. The request may be sent to any base station within the predetermined geographical area. If the request is sent to a base station that does not have a copy of the list available, the base station will arrange a copy of the list in response to the request sent by the mobile device, and forward the list upon reception to the mobile device **1.**

Alternatively, the obtaining in action **21** may include receiving the list via a broadcast channel. In this case, all or some of the base stations may be arranged to broadcast the list via such a broadcast channel.

It can be readily understood that the method of determining a location of a mobile device as described with reference to FIGS. 1 and 2 benefits from a list that is up to date. That is, the list should represent the positions of all communication units within the predetermined geographical area at the moment of obtaining as well as possible, and should include recent changes.

Generally, within the predetermined geographical area, the number and locations of communication units varies. For example, new communication units may be activated or existing communication units may be deactivated, communication units may change location within the predetermined geographical area, or communication units may be moved inside or outside the predetermined geographical area. Therefore, it is desirable to manage the list so as to be able to provide a list that represents the most recent communication unit distribution within the predetermined geographical area.

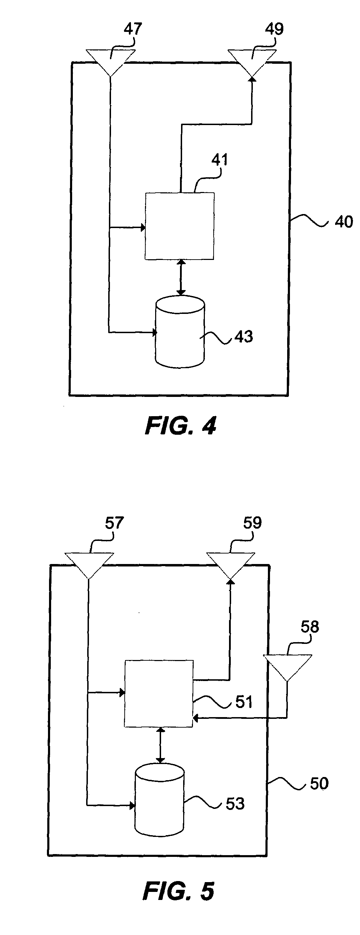

FIG. 3 schematically depicts a flow diagram of a method of managing a list for use in a base station, the list comprising records of communication units located within a predetermined geographical area according to an embodiment of the invention. The base station may take the form of the base station **50** discussed with reference to FIG. 5.

In action **31,** the base station receives a message from a communication unit. The message comprises a communication unit identifier and position information. The base station is part of the second network, but may receive a message regarding the identity and position of access points within the first network and base stations within the second network.

In action **33,** the base station checks whether the communication unit identifier of the communication unit is present in the list.

If the communication unit identifier is not present in the list, a communication unit record including the communication unit identifier and the position information of that communication unit is added to the list in action **35.** On the other hand, if the communication unit identifier is present in the list, the method proceeds to action **37,** in which the position information regarding the respective communication unit in the message is compared with the position information stored in the list for that respective communication unit.

If the position information for a communication unit in the message is different from the position information for the same communication unit in the list, the base station amends the position information of that communication unit in the list in action **38.** On the other hand, if the position information in the message is the same as the position information in the list, no amendment is made, schematically represented in FIG. 3 as action **39.** It should be understood that "no amendment" includes a replacement of all data in a record, where the new data being stored is similar to the data being replaced. In such a case a timestamp may be updated. In embodiments of the invention, amendments are only made conditionally, e.g. only if the information provided in the message is considered to have a minimum reliability.

FIG. 4 schematically depicts an embodiment of a mobile device **40** according to an embodiment of the invention. The mobile device **40** is arranged to perform embodiments of a method of determining a location of a mobile device in the first network, e.g. the method schematically depicted in and explained with reference to FIG. 2. The mobile device comprises a processor **41,** a memory **43,** and a receiver **47.**

The processor **41** is communicatively coupled to the memory **43.** The processor **41** may comprise a control unit to control signals received by the receiver **47,** e.g. for the purpose of controlling detection. The receiver **47** may be arranged to operate within the first network and the second network. Alternatively, the mobile device **40** may comprise two receivers, a first receiver arranged to operate within the first network, and a second receiver arranged to operate within the second network.

In embodiments of the invention, the mobile device **40** may further comprise a transmitter **49.** In such embodiment, the processor **41** may be arranged to control signals to be sent via the transmitter **49.**

FIG. 5 schematically depicts an embodiment of a primary base station **50** that may be used in embodiments of the invention, i.e. as base station **3a, 3b** or **3c** in FIGS. 1A, 1B. The base station **50** of FIG. 5 may further be used to implement a method of managing a list for use in the base station, the list comprising records of communication units located within a predetermined geographical area. An embodiment of such a method of managing has been discussed with reference to FIG. 3.

The base station **50** comprises a processor **51** communicatively coupled to a database **53.** In the database **53,** a list of records of communication units may be stored, the communication units being located within a predetermined geographical area. A communication unit record comprises a communication unit identifier and position information. The communication unit record may further comprise radio technology information corresponding to the respective communication unit.

The base station **50** further comprises a receiver **57** and a transmitter **59.** The receiver **57** and the transmitter **59** are arranged to communicate via a communication interface within the second network, and may be able to communicate via a communication interface within the first network as well. In embodiments, the cellular base station **50** may further comprise a further receiver **58.** The further receiver **58** may be connected to a fixed network, e.g. Internet or a PSTN.

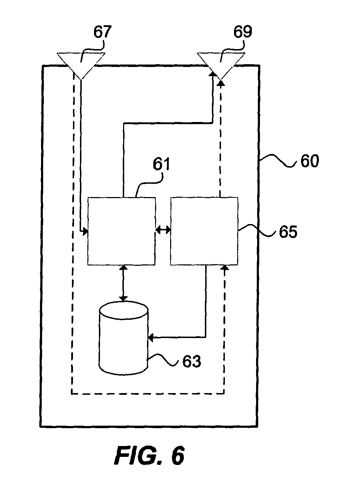

FIG. 6 schematically depicts an embodiment of an access point **60** that may be used in embodiments of the present invention. The access point **60** comprises a processor **61,** a memory **63,** a receiver **67** and a transmitter **69.**

The receiver **67** may be arranged to receive signals from a mobile device. The receiver **67** may further be arranged to detect one or more base stations within the second network.

The transmitter **69** may be arranged to transmit the access point identifier and position information to one or more detected base stations. If the respective base station is part of the first network and located within the coverage area of the access point **60,** the access point identifier and position information may be sent via a communication interface within the first network. Alternatively, the access point **60** may be part of the second network, and the transmitter **69** may be arranged to transmit the access point identifier and position information via a communication interface within the second network.

The processor **61** may comprise a control unit to control signals received by the receiver **67** and signals to be sent via the transmitter **69,** e.g. for the purpose of controlling detection of base stations or for the purpose of responding to signals received from a mobile device. Alternatively, or additionally, the processor **61** may enable transmission of the access point identifier and position information of the access point in a different way, e.g. by transmission via a fixed network like Internet or a PSTN.

The access point memory **63** is configured to store or stores an access point identifier and position information of the access point **60.** The access point identifier may already have been stored in the access point memory **63** at the time of manufacturing. The position information of the access point **60** may be provided via a user interface (not shown), e.g. via a keyboard, touch screen, etc. The access point memory **63** may further be configured to store or stores radio technology information. In such a case, the radio technology information may be transmitted via transmitter **69** controlled by the processor **61** as described earlier.

In an embodiment, the access point **60** further comprises a position determination unit **65** for determining the position of the access point **60.** The position determination unit **65** may make use of the receiver **67** and the transmitter **69** of the access point **60.** If the position has been determined, the position may be stored in the access point memory **63.** The location determination unit may comprise a global positioning system (GPS) receiver.

In FIG. 6, data transferred in view of the determining of a position by means of a position determination unit has been shown with the dashed arrows. Data related to the scanning action, has been depicted by means of the solid arrows.

It must be understood that although embodiments of the invention have been described with reference to two different types of networks, the invention is not limited to this number. Thus, in embodiments of the invention more than two different cellular communication networks may be applied.

The invention has been described by reference to certain embodiments discussed above. It will be recognized that these embodiments are susceptible to various modifications and alternative forms well known to those of skill in the art.

### Abbreviations

- CDMA2000: Code Division Multiple Access 2000
- DECT: Digital Enhanced Cordless Telecommunications
- DVB: Digital Video Broadcasting
- GSM: Global System for Mobile telecommunications
- InMarSat: International Mobile Satellite Organization
- IS-95: Interim Standard 95
- LBS: Location Based Services
- LTE: Long Term Evolution
- MAC: Media Access Control
- NFC: Near Field Communication
- RFID: Radio Frequency Identification
- SSID: Service Set Identifier
- TETRA: Terrestrial Trunked Radio
- UMTS: Universal Mobile Telecommunications System
- UWB: Ultra Wide Band
- WCDMA: Wideband Code Division Multiple Access
- WIMAX: Worldwide Interoperability for Microwave Access
- WLAN: Wireless Local Area Network

## Claims

1. A method of determining a location of a mobile device (1) for use in a first communication network and a second communication network, and in communication with a cellular base station in the second communication network, the method comprising:
- obtaining, a list of records of communication units within the first and/or second communication network that are located within a predetermined geographical area, the communication unit records comprising information representative of the identity of the respective communication units and information representative of the position of the respective communication units;
- detecting communication units within the first and second communication network with said mobile device; and
- determining the location of the mobile device based on the information representative of the position of the detected communication units.

2. The method of claim 1, wherein the communication unit record further comprises information representative of one or more types of radio technology supported by the respective communication unit.

3. The method of claim 1 or 2, wherein a nominal coverage area of a communication unit within the second communication network is larger than a nominal coverage area of a communication unit within the first communication network.

4. The method of any one of claims 1-3, wherein said obtaining comprises sending a request for reception of said list to the cellular base station; and receiving said list in response.

5. The method of any one of claims 1-3, wherein said obtaining comprises receiving said list of records of communication units located within a predetermined geographical area via a broadcast channel.

6. The method of any preceding claim, wherein said detecting comprises determining an identity of a detected communication unit.

7. A mobile device (1, 40) arranged to be part of a first communication network and a second communication network, the mobile device comprising:
- a receiver (47) for receiving data from one or more communication units in the first communication network and/or the second communication network;
- a memory (43) for storing a list of records of communication units located within a predetermined geographical area; and
- a processor (41) for processing data received via said receiver and/or the list stored in said memory;
wherein the mobile device is arranged to perform the method of determining a location of the mobile device in the first communication network according to any preceding claim.

8. A method of managing a list for use in a cellular base station (3a-3d, 50), the list comprising records of communication units located within a predetermined geographical area, a communication unit record comprising information representative of the identity of the respective communication units and information representative of the position of the respective communication units, the method comprising:
- receiving a message from a communication unit, the message comprising the information representative of the identity of the respective communication unit and information representative of the position of the respective communication unit;
- amending the information representative of the position of the communication unit in said list if the information representative of the identity of the communication unit relates to a communication unit being present in the list and the information representative of the position of that communication unit in the list differs from the information representative of the position received in the message; and
- adding a record of a communication unit to the list, including the information representative of the identity of the communication unit and the information representative of the position of the communication unit, if the information representative of the identity of the communication unit relates to a communication unit not being present in the list.

9. The method of claim 8, wherein the message further comprises information representative of one or more types of radio technology supported by the respective communication unit, and said amending is further performed if the information representative of the one or more types of radio technology supported by the communication unit in the list differs from the same information received in the message.

10. A cellular base station (3a, 3b, 3c, 3d, 50) comprising:
- a receiver (57) for receiving data from one or more communication units in the first communication network and/or the second communication network;
- a transmitter (59) for transmitting data towards one or more communication units in the first communication network and/or the second communication network
- a database (53) for storing data;
- a processor (51) for processing data received via said receiver and/or stored in said memory;
wherein the base station is arranged to perform the method of managing a list according to claim 8 or 9.

11. The base station of claim 10, wherein the transmitter is further arranged to transmit said list via a broadcast channel.

12. The base station of claim 10, wherein the receiver is further arranged to receive a request from a mobile device for providing the list to the mobile device, and the base station is further arranged to provide said list via said transmitter in response to said request.

13. An access point (5, 60) comprising:
- an access point memory (63) storing information representative of an identity of the access point, information representative of a position of the access point, and information representative of one or more types of radio technology supported by the access point;
- a receiver (67) for detecting one or more cellular base stations (3a, 3b, 3c, 3d, 50) within a second communication network;
- a processor (61) for enabling transmission of said access point identifier, said information representative of the position of the access point and said information representative of the one or more types of radio technology supported by the access point to said one or more cellular base stations upon detection.

14. The access point of claim 13, further comprising a position determination unit (65) for determining its position and storing the determined position in the access point memory.

15. The access point of claim 14, wherein said location determination unit comprises a global positioning system, GPS, receiver.
